**Europäisches Patentamt**

**European Patent Office**

**Office européen des brevets**

(19)

(11) Numéro de publication: **0 018 916**
**B1**

# FASCICULE DE BREVET EUROPEEN

(12)

(45) Date de publication du fascicule du brevet:
08.12.82

(51) Int. Cl.³: **G 01 M 3/18, G 21 C 17/00**

(21) Numéro de dépôt: **80400599.9**

(22) Date de dépôt: **30.04.80**

(54) Sous-ensemble pour la détection de fuites d'un métal liquide et dispositif de détection comprenant plusieurs sous-ensembles de ce type.

(30) Priorité: **03.05.79 FR 7911142**

(43) Date de publication de la demande:
**12.11.80 Bulletin 80/23**

(45) Mention de la délivrance du brevet:
**08.12.82 Bulletin 82/49**

(84) Etats contractants désignés:
**BE DE GB IT NL**

(56) Documents cités:
**DE-A-2 304 368**
**FR-A-1 348 404**
**FR-A-1 377 519**
**FR-A-2 382 685**

(73) Titulaire: **COMMISSARIAT A L'ENERGIE ATOMIQUE
Etablissement de Caractère Scientifique Technique et
Industriel, B.P. 510, F-75752 Paris Cedex 15 (FR)**
Titulaire: **Sté CARBONISATION ENTREPRISE ET
CERAMIQUE, 99, Avenue Aristide Briand B.P. 560,
F-92542 Montrouge Cédex (FR)**

(72) Inventeur: **Belval, Michel, Villa La Rose des Alpes
Avenue des Marronniers, F-04130 Volx (FR)**
Inventeur: **Casselman, Chantal, Résidence Latel Place
Pierre de Coubertin, F-04100 Manosque (FR)**
Inventeur: **Malet, Jean-Claude, 27, Les Sycomores-Les
Lagissons, F-13770 Venelles (FR)**
Inventeur: **Prats, Christian, 5, rue Antoine Richard,
F-78000 Versailles (FR)**
Inventeur: **Meneret, Jean, 12, Avenue Henri Regnault,
F-92310 Sevres (FR)**

(74) Mandataire: **Mongrédien, André et al, c/o
Brevatome 25, rue de Ponthieu, F-75008 Paris (FR)**

BUNDESDRUCKEREI BERLIN

## Sous-ensemble pour la détection de fuites d'un métal liquide et dispositif de détection compressant plusieurs sous-ensembles de ce type

L'invention concerne un sous-ensemble pour la détection de fuites d'un métal liquide circulant dans un organe d'un circuit tel qu'une conduite ou une vanne ou contenu dans un organe de stockage tel qu'un réservoir, ainsi qu'un dispositif de détection comprenant plusieurs sous-ensembles de ce type.

Dans certaines applications, et notamment dans les réacteurs nucléaires surrégénérateurs, un métal liquide tel que du sodium fondu circule dans des circuits. Pour des raisons de sécurite évidentes, en particulier lorsque le métal liquide est constitué par du sodium, il est nécessaire de pouvoir détecter rapidement et de façon précise l'existence de fuites de ce métal le long du circuit ou d'un réservoir qui le contient.

Afin de réaliser une telle détection, on a proposé un certain nombre de dispositifs. Ces dispositifs comprennent pour la plupart des éléments électriquement conducteurs, se présentant par exemple sous la forme de fils, de plaques ou de grilles, associés à un matériau support électriquement isolant interposé entre ces éléments électriquement conducteurs et la conduite dans laquelle circule le métal liquide. Le support en matériau isolant peut être constitué par exemple par un tissu de fils de silice ou par une couche de feutre perméable. Selon les dispositifs, la fuite du métal liquide est détectée, soit par l'établissement d'un contact électrique entre deux éléments électriquement conducteurs voisins, soit par l'établissement d'un contact électrique entre un ou plusieurs de ces éléments électriquement conducteurs et la conduite. Dans tous les cas, la détection n'intervient que lorsque le métal liquide provenant de la fuite a traversé le support en matériau électriquement isolant, ce qui n'est réalisé généralement qu'au bout d'un temps relativement long pouvant atteindre plusieurs minutes. Ce temps de réponse n'est évidemment pas satisfaisant, notamment lorsque le métal liquide est constitué par du sodium, en raison du risque d'incendie créé par l'existence d'une fuite. En outre, ces dispositifs connus sont fragiles et d'un maniement délicat, surtout lorsqu'ils travaillant à une température relativement élevée comme cela est le cas lorsqu'ils entourent des conduites dans lesquelles circule du sodium liquide.

En outre, le document FR-A-2 382 685 décrit un détecteur de fuites pour une canalisation contenant du métal liquide et entourée à distance d'une enveloppe. Cette enveloppe comporte à son poùnt le plus bas une rigole renfermant des fils isolés les une des autres et de l'enveloppe, l'isolation des fils étant interrompue de.telle manière que de métal liquide s'echappant de la canalisation et secuilli dans la rigole, établisse une liaison électrique entre les fils.

L'invention a pour but la réalisation d'un dispositif de détection de fuites d'un métal liquide ne présentant pas les défauts des dispositifs connus et se caractérisant notamment par un temps de réponse particulièrement court et par un maniement extrêmement facile.

Dans ce but, il est proposé un sous-ensemble pour la détection de fuites d'un métal liquide circulant dans un organe d'un circuit tel qu'une conduite ou une vanne ou contenu dans un organe de stockage tel qu'un réservoir, comprenant des éléments électriquement conducteurs disposés à l'intérieur d'un matériau électriquement isolant, caractérisé en ce que ledit matériau isolant est constitué par une coquille rigide dont la face interne épouse la face externe dudit organe, des rainures ouvertes étant formées sur la face interne de la coquille pour recevoir lesdits éléments électriquement conducteurs, les rainures présentant en section une partie élargie, éloignée de la face interne de la coquille, recevant les éléments électriquement conducteurs, et une partie de largeur réduite, située entre la partie élargie et la face interne de la coquille et maintenant les éléments électriquement conducteurs espacés de ladite face interne.

En raison de la disposition des éléments électriquement conducteurs dans des rainures ouvertes en vis-à-vis de la conduite, il est clair que toute fuite de métal liquide se produisant sur celle-ci aura pour conséquence immédiate la mise en contact électrique par ce métal de l'un au moins des éléments électriquement conducteurs et de la conduite. En outre, la réalisation du dispositif sous forme de coquille rigide permet une manutention, un transport et un assemblage de ces sous-ensembles beaucoup plus facile que pour les dispositifs antérieurs connus.

Selon une autre caractéristique de l'invention, la partie élargie des rainures présente en section une forme complémentaire de l'enveloppe externe des éléments électriquement conducteurs.

Selon une première variante de l'invention, les éléments électriquement conducteurs sont des fils métalliques enroulés en hélice à l'intérieur des rainures.

Selon une seconde variante, les éléments électriquement conducteurs sont des rubans métalliques formant des ondulations à l'intérieur des rainures.

Conformément à une autre caractéristique secondaire de l'invention, ia coquille rigide est réalisée en un matériau comprenant des fibres noyées dans un liant de renforcement rigidifié.

Conformément à un mode de réalisation particulier de l'invention, un tel sous-ensemble pour la détection de fuites d'un métal liquide circulant dans une conduite est caractérisé en ce que la coquille rigide se présente sous la forme d'un demï-cylindre creux, les rainures étant hélicoïdales, parallèles entre elles et régulièrement espacées. De préférence, les rainures sont alors inclinées sensiblement à 45° par rapport à l'axe de la coquille, ce qui permet de disposer le sous-ensemble aussi bien sur une conduite verticale que sur une conduite horizontale ou oblique.

Conformément à un autre mode de réalisation de l'invention, un sous-ensemble pour la détection de fuites d'un métal liquide circulant dans une conduite, est caractérisé en ce que la coquille rigide se présente sous la forme d'un demi-cylindre creux, les rainures étant parallèles à l'axe du demi-cylindre et régulièrement espacées. Les éléments électriquement conducteurs peuvent alors être disposés dans les rainures sur des longueurs et/ou avec des intervalles différents, de façon à définir des zones transversales identifiables électriquement les unes par rapport aux autres. Il est ainsi possible de réaliser un véritable codage électrique du sous-ensemble permettant de localiser avec précision une fuite du métal liquide à l'intérieur d'un sous-ensemble relativement long.

Selon une autre caractéristique de l'invention, chacun des éléments électriquement conducteurs est connecté électriquement par ses deux extrémités à des bornes débouchant sur la face externe de la coquille. Dans ce cas, des barrettes électriquement conductrices peuvent être disposées sur la face externe de la coquille entre certaines desdites bornes de façon à raccorder électriquement en série plusieurs éléments électriquement conducteurs.

L'invention concerne également un dispositif de détection de fuites d'un métal liquide circulant dans un circuit comprenant un ou plusieurs organes tels qu'une conduite ou une vanne, caractérisé en ce qu'il comprend plusieurs sous-ensembles assemblés par paires de façon à entourer le circuit et des moyens pour détecter un courtcircuit entre le circuit et l'un quelconque des éléments électriquement conducteurs. Ces derniers peuvent alors définir des résistances chauffantes susceptibles d'être connectées à une source de courant appropriée pour assurer le chauffage du circuit. Cette caractéristique permet d'éviter d'avoir recours à deux dispositifs séparés, notamment dans les réacteurs nucléaires surrégénérateurs refroidis par du sodium liquide, pour détecter les fuites de sodium et pour assurer le préchauffage du circuit ou le chauffage du circuit et du sodium dans le cas où celui-ci se serait solidifié par suite d'un arrêt prolongé du réacteur.

Conformément à une autre caractéristique de l'invention, les éléments électriquement conducteurs reçus dans les rainures formées dans une ou plusieurs des coquilles rigides sont raccordés entre eux pour former des boucles voisines connectées auxdits moyens pour détecter un courtcircuit et, éventuellement, à la source de tension permettant d'assurer le chauffage de la conduite.

Selon une variante de l'invention, lorsque chacun des éléments électriquement conducteurs d'un même sous-ensemble est connecté électriquement par ses deux extrémités à des bornes débouchant sur la face externe de la coquille correspondante, des barrettes électriquement conductrices sont disposées sur la face externe des coquilles entre certaines desdites bornes de deux sous-ensembles voisins, de façon à raccorder électriquement en série des éléments électriquement conducteurs de ces sous-ensembles.

On décrira maintenant, à titre d'exemple non limitatif, un mode de réalisation particulier de l'invention en se référant aux dessins annexés dans lasquels:

— la fig. 1 est une vue en perspective illustrant un dispositif de détection de fuites d'un métal liquide circulant dans une conduite, ce dispositif comprenant plusieurs sous-ensembles réalisés conformément à l'invention,

— la fig. 2 est une vue en perspective éclatée de l'un des sous-ensembles constituant le dispositif représenté sur la fig. 1, montrant notamment la face interne de ce sous-ensemble,

— la fig. 3 est une vue en coupe longitudinale du sous-ensemble représenté sur la fig. 2 illustrant une première variante de l'invention, dans laquelle les éléments électriquement conducteurs sont constitués par des fils enroulés en hélice,

— la fig. 4 est une vue en coupe comparable à la fig. 3 illustrant une seconde variante de l'invention, dans laquelle les éléments électriquement conducteurs sont constitués par des rubans métalliques formant des ondulations,

— la fig. 5 est une vue en perspective représentant isolément l'un des éléments électriquement conducteurs de la variante de la fig. 4, et

— la fig. 6 est une vue en perspective éclatée représentant un sous-ensemble dont les éléments électriquement conducteurs sont disposés de façon à réaliser un codage électrique.

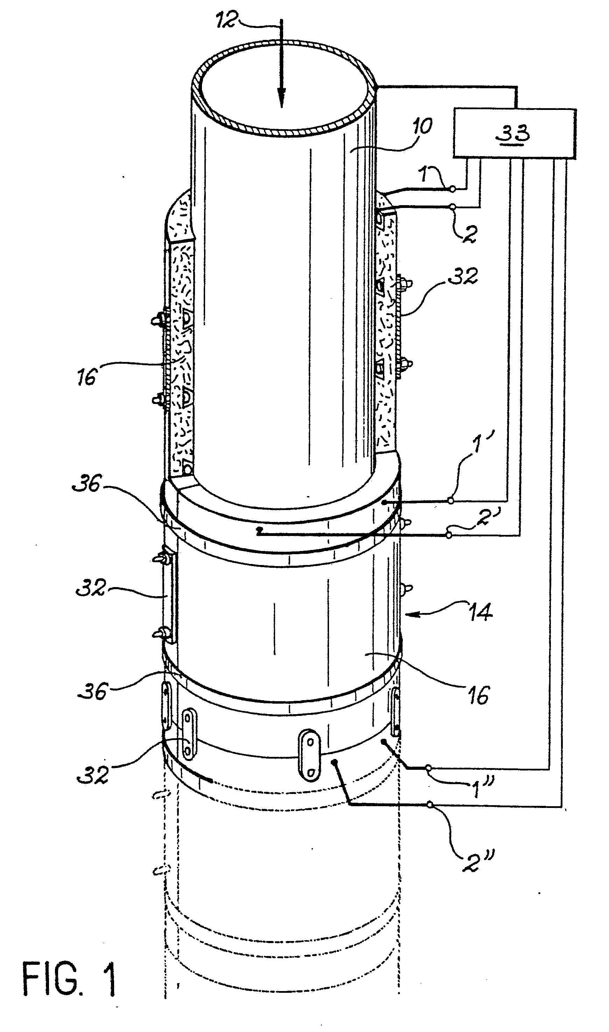

Sur la fig. 1, on a représenté une conduite tubulaire et verticale 10 dans laquelle circule un métal liquide, par exemple dans le sens de la flèche 12. La conduite 10 peut constituer une partie du circuit secondaire d'un réacteur nucléaire surrégénérateur, le métal liquide étant alors constitué par du sodium.

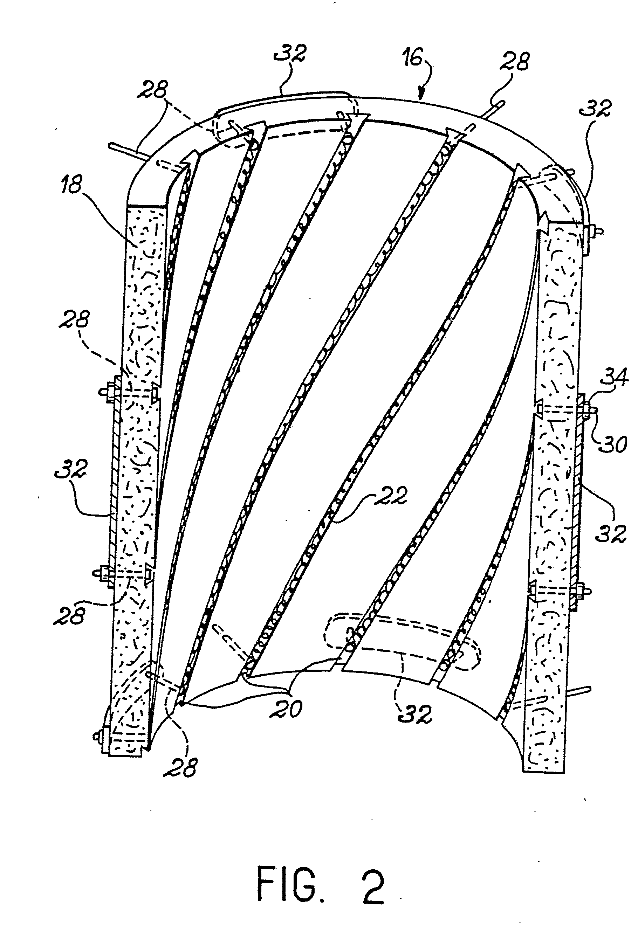

Conformément à l'invention, la conduite 10 est entourée par un dispositif de détection de fuites désigné par la référence générale 14, comprenant un certain nombre de sous-ensembles 16 dont l'un est représenté isolément sur la fig. 2. Chaque sous-ensemble 16 comprend une coquille rigide 18 qui se présente sous la forme d'un demi-cylindre creux dont la face interne est complémentaire de la face externe de la conduite 10. La coquille 18 est réalisée en un matériau électriquement isolant et rigide telque, par exemple, des fibres d'un silico-aluminate (laine minérale) noyées dans un liant de renforcement rigidifié (suspension de silice colloïdale et de silicate de soude). Dans ce cas, la coquille rigide 18 peut être obtenue soit par séchage, puis cuisson du matériau fibreux préimprégné par le liant de renforcement sous forme liquide, soit par sédimentation, les fibres étant alors suspendues dans un liquides de renforcement, puis déposées par sédimentation ou par aspiration sur une paroi poreuse telle qu'une toile.

A titre d'information, on notera que le poids spécifique du matériau constituant les coquilles est compris entre 250 kg/m3 et 350 kg/m3. Des essais de rupture à sec effectués sur des éprouvettes de largeur b (en cm) et d'épaisseur d (en cm) reposant sur deux supports placés à une distance l (en cm) et dont la rupture est provoquée par une charge W (en kg) ont permis de déterminer que le module de rupture à sec de ce matériau, défini par la formulare $R = \dfrac{3\,Wl}{2\,bd^2}$, est compris entre 50 kg/cm2 et 100 kg/cm2.

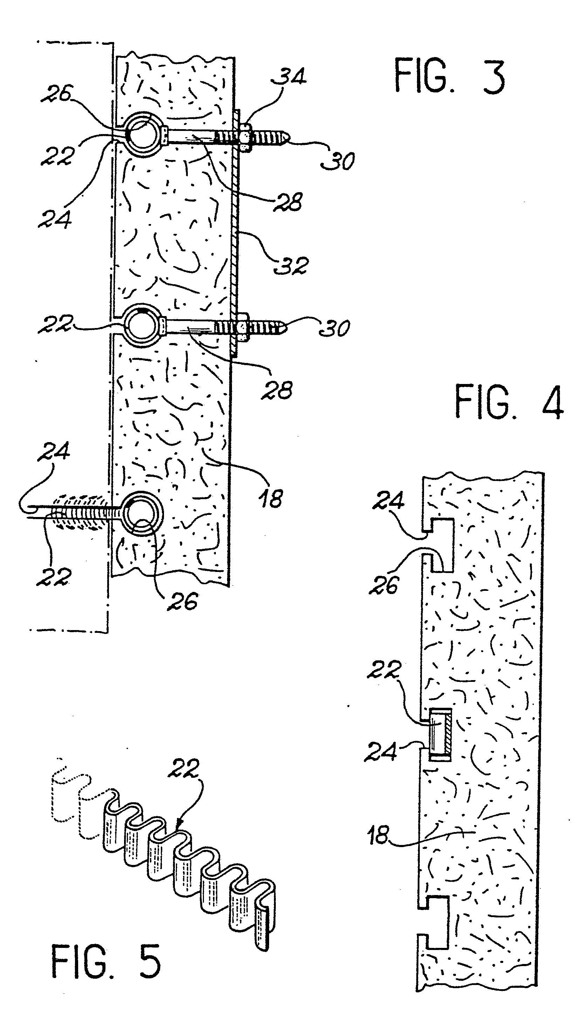

Comme le montre en particulier la fig. 2, des rainures ouvertes 20 sont formées sur la face interne de la coquille 18. De préférence, les rainures 20 sont hélicoïdales, parallèles entre elles et régulièrement espacées et définissent un angle d'environ 45° par rapport à l'axe de la coquille 18. Chacune des rainures 20 reçoit un élément électriquement conducteur 22 qui peut être constitué, soit par un fil électrique enroulé en hélice comme l'illustre la fig. 3, soit par un ruban métallique formant des ondulations comme l'illustrent les fig. 4 et 5. Les éléments électriquement conducteurs 22 sont maintenus dans les rainures 20 par des moyens de retenue constitués de préférence par une partie de largeur réduits 24 des rainures, cette partie 24 étant située entre la face interne de la coquille 18 et une partie élargie 26, dans laquelle sont reçus les éléments 22. Les rainures 20 peuvent présenter en section une forme de queue d'aronde comme l'illustrent les fig. 1 et 2. Cependant, la partie 26 recevant les éléments 22 présente de préférence en section une forme complémentaire de l'enveloppe externe de ces éléments, de sorte que les rainures 20 présentent alors la forme représentée sur la fig. 3 lorsque les éléments 22 sont des fils enroulés en spirale, ou une forme de mortaise comme l'illustre la fig. 4 lorsque les éléments 22 sont des rubans présentant des ondulations.

Comme l'illustre notamment la fig. 2, chacun des éléments conducteurs 22 est connecté électriquement par ses deux extrémités à des bornes 28 constituées par des tiges traversant des passages appropriés formés entre le fond des rainures 20 et la face externe de la coquille 18. Les tiges 28 se terminent à l'extérieur de la coquille 18 par des parties filetées 30 permettant de les raccorder à volonté avec une tige voisine ou avec un dispositif externe approprié. Ainsi, deux tiges 28 voisines peuvent être raccordées entre elles au moyen d'une barrette conductrice 32 fixée par des écrous 34 vissés sur les parties filetées 30.

Comme l'illustre la fig. 2, les barrettes 32 peuvent relier exclusivement les tiges 28 adjacentes d'un seul sous-ensemble 16, de façon à définir sur celui-ci deux ou plusieurs circuits électriquement conducteurs susceptibles d'être raccordés par des bornes 28 telles que les bornes 1 − 2, 1′ − 2′ et 1″ − 2″ à des moyens de détection (non représentés) d'un court-circuit éventuel entre la conduite 10 et chacun de ces circuits.

Bien entendu, et comme l'illustre la fig. 1, les barrettes 32 peuvent également être utilisées pour raccorder électriquement les éléments électriquement conducteurs de deux sous-ensembles 16 voisins, et pour relier mécaniquement ces sous-ensembles entre eux. Des circuits très variés peuvent ainsi être constitués au moyen des éléments électriquement conducteurs 22 et des barretts 32 selon la structure particulière du circuit à surveiller. Ainsi, les éléments électriquement conducteurs d'un sous-ensemble 16 ou de plusieurs sous-ensembles successifs peuvent être connectés deux par deux en forme de boucles, de telle sorte que les bornes 28, telles que les bornes 1 − 2, 1′ − 2′ et 1″ − 2″ sur la fig. 1, des circuits ainsi formés, se trouvent situés à la même extrémité de l'un des sous-ensembles 16 ou sur un même côté de celui-ci. Quels que soient les circuits électriques ainsi constitués à l'intérieur du dispositif 14, les bornes 28 de ces circuits, telles que 1 − 2, 1′ − 2′ ou 1″ − 2″ sur la fig. 1, sont raccordées à un système de détection de défauts d'isolement 33 qui est également en contact électrique avec la conduite 10, de façon à détecter un éventuel courtcircuit entre cette conduite et l'un quelconque des circuits. La surveillance peut ainsi être effectuée soit en continu, soit par balayage. Le système de détection électronique 33 assure les fonctions suivantes:

- vérification de la continuité de chacun des circuits aboutissent aux bornes 28,
- surveillance de l'isolement de chaque circuit par rapport à la conduite 10,
- déclenchement d'une alarme en cas de défaut.

Le principe de fonctionnement du système 33 est basé sur la mesure de la résistance d'isolement par la méthode classique du pont de Wheatstone. Un circuit comparateur de zéro détecte le basculement de la polarité lors de l'abaissement de la résistance d'isolement produit par la mise à la masse d'un circuit aboutissant aux bornes 28 par le sodium. Un potentiomètre permet de choisir le seuil de détection par déplacement du point d'équilibre du pont de mesure de Wheatstone, par exemple entre quelques centaines d'ohms et 10 000 ohms. Chaque circuit ou boucle est testé à tour de rôle au moyen d'un dispositif de balayage qui déclenche une alarme lorsque la boucle correspondante est en défaut. Ce principe permet de limiter les fausses alarmes en éliminant les défauts transitoires de type parasite. Lorsque l'alarme est déclenchée, elle reste maintenue jusqu'à l'intervention manuelle de réarmement même si le défaut disparaît. Simultanément, lorsque le dispositif de détection 14 est monté sur une conduite 10 dans laquelle circule du sodium liquide, les bornes 1, 2 de chacun des circuits électriques définis par ce dispositif sont également raccordées à une source de courant appropriée (non représentée) permettant d'assurer le préchauffage de la conduite 10 et le chauffage de la conduite et du sodium en cas d'arrêt prolongé du réacteur. Ce chauffage est obtenu par effet Joule à l'intérieur des éléments électriquement conducteurs 22 qui définissent également des résistances chauffantes.

Comme l'illustre en particulier la fig. 1, les sous-ensembles 16 constituant le dispositif 14 sont assemblés deux à deux autour de la conduite 10, par exemple au moyen de cerclages 36 ou au moyen de barrettes 32 conductrices ou isolantes selon la configuration des circuits électriques que l'on désire obtenir. De même, les sous-ensembles 16 disposés successivement le long de la conduite 10 peuvent également être raccordés les uns aux autres par exemple au moyen de barrettes 32 conductrices ou isolantes.

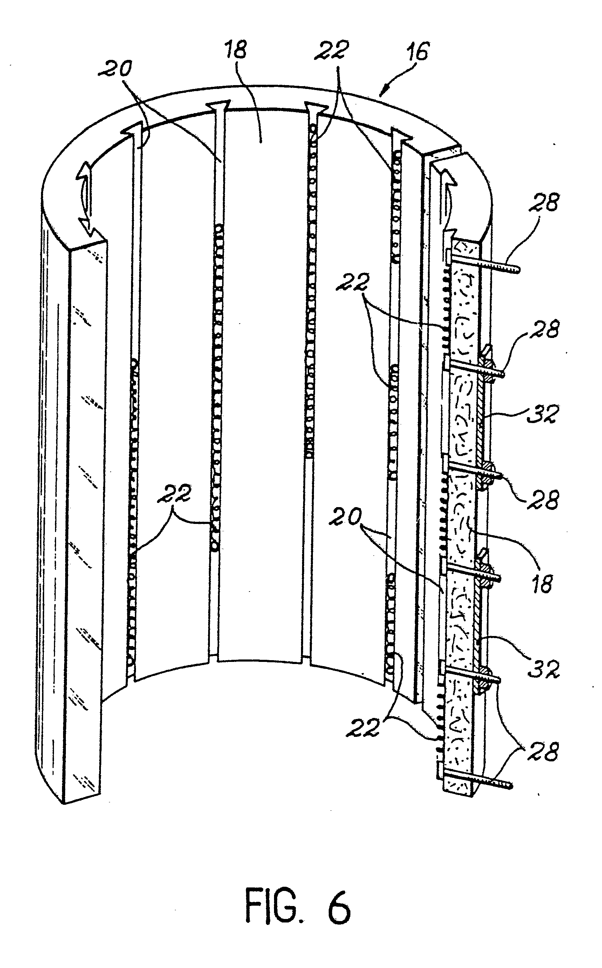

Dans le mode de réalisation de la fig. 6, les rainures ouvertes 20 formées dans les sous-ensembles 16, dont l'un est représenté en coupe le long d'une des rainures, s'étendent parallèlement à l'axe du demi-cylindre défini par les coquilles 18. En outre, les éléments électriquement conducteurs 22 sont disposés dans les rainures 20 sur des longueurs différentes d'une rainure à l'autre et/ou avec des intervalles différents, de façon à définir des zones transversales codées, et donc identifiables électriquement les unes par rapport aux autres. Ainsi, si une fuite de sodium se produit dans la conduite au niveau de l'une ou de plusieurs de ces zones, un contact électrique s'établit entre la conduite et les éléments conducteurs 22 situés dans ces zones, de sorte que la détection des contacts électriques ainsi établis permet, connaissant le schéma de répartition des zones codées le long de la conduite, de localiser avec toute la précision souhaitée la fuite ainsi détectée. Pratiquement, les zones codées sont réalisées en fractionnant les éléments électriquement conducteurs 22, comme l'illustre à titre d'exemple la fig. 6, ces éléments étant reliés électriquement entre eux en série au moyen de tiges 28 et de barrettes conductrices 32 du même type que celles qui ont été décrites précédemment en se référant aux fig. 1 à 3. De préférence, les zones ainsi définies sur chacun des sous-ensembles 16 sont toutes de même longueur, ce qui signifie que les longueurs des éléments 22 et les intervalles entre deux éléments situés dans une même rainure 20 ou entre un élément et l'extrémité de la coquille 18 sont tous des multiples et des sous-multiples les uns des autres.

Le dispositif qui vient d'être décrit en se référant aux fig. 1 à 6 fonctionne de la façon suivante.

Lorsque les sous-ensembles 16 ont été assemblés et montés sur la conduite 10, comme l'illustre la fig. 1, la configuration des circuits électriques de détection constitués par la mise en place des barrettes conductrices 32 a été de préférence définie en tenant compte des dimensions de chacun des sous-ensembles 16, afin de permettre une localisation aussi précise que possible d'une fuite éventuelle se produisant dans la conduite 10. Ainsi, si la longueur de chacun des sous-ensembles 16 est de deux mètres, un circuit électrique limité à ce sous-ensemble permettra une détection relativement précise de la fuite nécessitant le démontage de ce sous-ensemble seul ou du sous-ensemble avec lequel il entoure la conduite 10. Si la longueur des sous-ensembles 16 est d'un mètre, un circuit électrique s'étendant sur deux sous-ensembles 16 consécutifs permettra de localiser une fuite éventuelle avec la même précision que dans l'hypothèse précédente. Bien entendu, dans le cas de la fig. 6, la localisation de la fuite peut être faite grâce au codage, de sorte que la configuration des circuits électriques est moins importante.

Lorsqu'une fuite de métal liquide se produit dans la conduite 10, en raison de la disposition des éléments conducteurs 22 dans les rainures ouvertes 20, le métal liquide qui s'échappe de la fuite vient presque instantanément en contact avec l'un des éléments 22, pourvu que ces éléments soient suffisamment rapprochés. En outre, la configuration hélicoïdale des rainures 20 (fig. 21) permet, en raison des forces de gravité agissant sur le métal liquide qui s'échappe de la fuite, de garantir une détection rapide de celle-ci aussi bien sur une conduite horizontale que sur une conduite verticale ou oblique. Cependant, il va de soi que l'invention n'est pas limitée à ce mode de réalisation particulier et s'applique, par exemple, également au cas de rainures longitudinales (fig. 6), les sous-ensembles étant alors destinés de préférence à des conduites horizontales, ou au cas de rainures annulaires, les sous-ensembles étant alors destinés de préférence à des conduites verticales. Dans tous les cas, étant donné que le métal liquide n'a pas à traverser de couches isolantes avant de venir en contact avec les éléments électriquement conducteurs 22, le contact électrique entre la conduite 10 et ces éléments s'établit en quelques secondes. Les bornes 1−2, 1'−2' ou 1''−2'' étant raccordées au système de détection de court-circuit 33 entre la conduite 10 et chacun de ces circuits, un système d'alarme tel qu'un voyant ou une alerte sonore se déclenche et permet de localiser rapidement la fuite par la connaissance du ou des circuits concernés.

Simultanément, et comme il a été mentionné précédemment, les bornes 1 – 2, 1' – 2', etc. de chacun des circuits constitués par les éléments électriquement conducteurs 22 reliés éventuellement par des barrettes 32 sont connectées à une source de courant permettant de chauffer la conduite 10 par effet Joule en utilisant les éléments électriquement conducteurs 22 comme des résistances chauffantes, que ces éléments se présentent sous la forme d'un fil métallique enroulé en hélice comme l'illustre la fig. 3 ou d'un ruban métallique présentant des ondulations comme l'illustrent les fig. 4 et 5.

Bien entendu, l'invention n'est pas limitée aux modes de réalisation qui viennent d'être décrits à titre d'exemples, mais en incorpore toutes les variantes. Ainsi, et bien qu'elle soit particulièrement adaptée à la détection des fuites de sodium, l'invention permet également de détecter les fuites de tout autre métal liquide. De même, la forme et les dimensions des sous-ensembles 16 peuvent être modifiées en fonction de la forme et des dimensions de l'organe du circuit dans lequel circule le métal liquide, cet organe pouvant être une conduite, une vanne, etc., et peuvent également être adaptées pour détecter des fuites de métal liquide contenues dans un organe de stockage tel qu'un réservoir. Enfin, les éléments électriquement conducteurs peuvent être maintenus espacés de la conduite ou du réservoir par tout moyen de retenue autre que la réalisation d'une partie de largeur réduite sur les rainures ouvertes, pourvu que ce moyen n'entrave pas le passage du métal liquide jusqu'aux éléments conducteurs en cas de fuite.

**Revendications**

1. Sous-ensemble pour la détection de fuites d'un métal liquide circulant dans un organe d'un circuit tel qu'une conduite (10) ou une vanne ou contenu dans un organe de stockage tel qu'un réservoir, comprenant des éléments électriquement conducteurs (22) disposés à l'intérieur d'un matériau électriquement isolant, caractérisé en ce que ledit matériau isolant est constitué par une coquille rigide (18) dont la face interne épouse la face externe dudit organe (10), des rainures ouvertes (20) étant formées sur la face interne de la coquille pour recevoir lesdits éléments électriquement conducteurs (22), les rainures (20) présentant en section une partie élargie (26) éloignée de la face interne de la coquille, recevant les éléments électriquement conducteurs, et une partie de largeur réduite (24), située entre la partie élargie et la face interne de la coquille et maintenant les éléments électriquement conducteurs (22) espacés de ladite face interne.

2. Sous-ensemble selon la revendication 1, caractérisé en ce que la partie élargie (26) des rainures présente en section une forme complémentaire de l'enveloppe externe des éléments électriquement conducteurs (22).

3. Sous-ensemble selon l'une quelconque des revendications précédentes, caractérisé en ce que les éléments électriquement conducteurs (22) sont des fils métalliques enroulés en hélice à l'intérieur des rainures (20).

4. Sous-ensemble selon l'une quelconque des revendications 1 et 2, caractérisé en ce que les éléments électriquement conducteurs (22) sont des rubans métalliques formant des ondulations à l'intérieur des rainures (20).

5. Sous-ensemble selon l'une quelconque des revendications précédentes, caractérisé en ce que la coquille rigide (18) est réalisée en un matériau comprenant des fibres noyées dans un liant de renforcement rigidifié.

6. Sous-ensemble pour la détection de fuites d'un métal liquide circulant dans une conduite (10) selon l'une quelconque des revendications précédentes, caractérisé en ce que la coquille rigide (18) se présente sous la forme d'un demi-cylindre creux, les rainures (20) étant hélicoïdales, parallèles entre elles et régulièrement espacées.

7. Sous-ensemble selon la revendication 6, caractérisé en ce que les rainures (20) sont inclinées sensiblement à 45° par rapport à l'axe de la coquille (18).

8. Sous-ensemble pour la détection de fuites d'un métal liquide circulant dans une conduite, selon l'une quelconque des revendications 1 à 5, caractérisé en ce que la coquille rigide (18) se présente sous la forme d'un demicylindre creux, les rainures étant parallèles à l'axe du demi-cylindre et régulièrement espacées.

9. Sous-ensemble selon la revendication 8, caractérisé en ce que les éléments électriquement conducteurs (22) sont disposés dans les rainures (20) sur des longueurs et/ou avec des intervalles différents, de façon à définir des zones transversales identifiables électriquement les unes par rapport aux autres.

10. Sous-ensemble selon l'une quelconque des revendications précédentes, caractérisé en ce que chacun des éléments électriquement conducteurs (22) est connecté électriquement par ses deux extrémités à des bornes (28) débouchant sur la face externe de la coquille (18).

11. Sous-ensemble selon la revendication 10, caractérisé en ce que des barrettes électriquement conductrices (32) sont disposées sur la face externe de la coquille (18) entre certaines desdites bornes (28) de façon à raccorder électriquement en série plusieurs éléments électriquement conducteurs (22).

12. Dispositif de détection de fuites d'un métal liquide circulant dans un circuit comprenant un ou plusieurs organes tels qu'une conduite (10) ou une vanne, caractérisé en ce qu'il comprend plusieurs sous-ensemble (16) selon l'une quelconque des revendications précédentes, et des moyens (33) pour détecter un court-circuit entre le circuit (10) et l'un quelconque des éléments électriquement conducteurs (22).

13. Dispositif selon la revendication 12, caractérisé en ce que les éléments électriquement conducteurs (22) déffinissent des résistances chauffantes susceptibles d'être connectées à une source de courant appropriée pour assurer le chauffage du circuit (10).

14. Dispositif selon l'une quelconque des revendications 12 ou 13, caractérisé en ce que les éléments électriquement conducteurs (22) reçus dans les rainures (20) formées dans une ou plusieurs des coquilles rigides (18) sont raccordés entre eux pour former des boucles voisines connectées moyens pour détecter un court-circuit (33).

15. Dispositif selon l'une quelconque des revendications 12 à 14, prisesen combinaison avec l'une quelconque des revendications 10 ou 11, caractérisé en ce que des barrettes électriquement conductrices (32) sont disposées sur la face externe des coquilles (18) entre certaines desdites bornes (28) de deux sous-ensembles (16) voisins, de façon à raccorder électriquement en série des éléments électriquement conducteurs (22) de ces sous-ensembles.

**Patentansprüche**

1. Einrichtung zum Feststellen von Leckagen eines flüssigen Metalls, welches in einem Element eines Kreislaufes, wie einer Leitung (10) oder einem Ventil strömt oder welches in einer Speichereinrichtung, wie einem Behälter enthalten ist, mit elektrisch leitenden Elementen (22), die im Inneren eines elektrisch isolierenden Materials angeordnet sind, dadurch gekennzeichnet, daß das isolierende Material von einer steifen Schale (18) gebildet ist, deren Innenfläche sich an die Außenfläche des Elementes (10) anschmiegt, daß an der Innenfläche der Schale offene Kanäle (20) zur Aufnahme der elektrisch leitenden Elemente (22) ausgebildet sind und daß die Kanäle (20) im Querschnitt einen von der Innenfläche des Mantels entfernten, vergrößerten Bereich (26) zur Aufnahme der elektrisch leitenden Elemente und einen Bereich (24) mit einer verringerten Größe aufweisen, der zwischen dem vergrößerten Bereich und der Innenfläche des Mantels angeordnet ist und die elektrisch leitenden Elemente (22) von dieser Innenfläche beabstandet hält.

2. Einrichtung nach Anspruch 1, dadurch gekennzeichnet, daß der vergrößerte Bereich (26) der Kanäle einen Querschnitt aufweist, der zu der äußeren Hüllfläche der elektrisch leitenden Elemente (22) eine komplementäre Form hat.

3. Einrichtung nach irgendeinem der vorhergehenden Ansprüche, dadurch gekennzeichnet, daß die elektrisch leitenden Elemente (22) Drähte aus Metall sind, welche schraubenförmig im Inneren der Kanäle (20) gewickelt sind.

4. Einrichtung nach einem der Ansprüche 1 oder 2, dadurch gekennzeichnet, daß die elektrisch leitenden Elemente (22) Bänder aus Metall sind, welche im Inneren der Kanäle (20) wellenförmig sind.

5. Einrichtung nach irgendeinem der vorhergehenden Ansprüche, dadurch gekennzeichnet, daß die steife Schale (18) aus einem Material gebildet ist, welches in einem steif gewordenen Verstärkungsbindemittel eingelagerte Fasern enthält.

6. Einrichtung zum Feststellen von Leckagen eines flüssigen Metalls, welches in einer Leitung (10) strömt, nach irgendeinem der vorhergehenden Ansprüche, dadurch gekennzeichnet, daß die steife Schale (18) in der Form eines hohlen Halbzylinders ausgebildet ist und daß die Kanäle (20) schraubenförmig und mit gleicher Beabstandung von und parallel zueinander verlaufen.

7. Einrichtung nach Anspruch 6, dadurch gekennzeichnet, daß die Kanäle (20) in bezug auf die Achse der Schale (18) im wesentlichen unter einem Winkel von 45° geneigt sind.

8. Einrichtung zum Feststellen von Leckagen eines in einer Leitung strömenden, flüssigen Metalls nach irgendeinem der Ansprüche 1 bis 5, dadurch gekennzeichnet, daß die steife Schale (18) die Form eines hohlen Halbzylinders aufweist und daß die Kanäle parallel zur Achse des Halbzylinders verlaufen und regelmäßig voneinander beabstandet sind.

9. Einrichtung nach Anspruch 8, dadurch gekennzeichnet, daß die elektrisch leitenden Elemente (22) in den Kanälen (20) mit unterschiedlichen Längen und/oder in unterschiedlichen Intervallen derart angeordnet sind, daß quer verlaufende Bereiche festgelegt werden, die voneinander elektrisch identifizierbar sind.

10. Einrichtung nach irgendeinem der vorhergehenden Ansprüche, dadurch gekennzeichnet, daß jedes elektrisch leitende Element (22) mit seinen zwei Enden mit Klemmen (28) elektrisch verbunden ist, welche auf der Außenseite der Schale (18) hervorstehen.

11. Einrichtung nach Anspruch 10, dadurch gekennzeichnet, daß elektrisch leitende Verbindungsschienen (32) auf der Außenfläche des Mantels (18) zwischen gewissen Klemmen (28) derart angeordnet sind, daß mehrere elektrisch leitende Elemente (22) elektrisch in Reihe miteinander verbunden werden.

12. Einrichtung zum Feststellen von Leckagen eines flüssigen Metalls, welches in einem Kreislauf strömt, der ein oder mehrere Elemente wie eine Leitung (10) oder ein Ventil enthält, dadurch gekennzeichnet, daß die Einrichtung mehrere Einrichtungen (16) nach irgendeinem der vorhergehenden Ansprüche und Mittel (33) enthält, um einen Kurzschluß zwischen dem Kreislauf (10) und irgendeinem der elektrisch leitenden Elemente (22) festzustellen.

13. Einrichtung nach Anspruch 12, dadurch gekennzeichnet, daß die elektrisch leitenden Elemente (22) Heizwiderstände festlegen, welche mit einer zur Sicherstellung der Heizung des Kreislaufes (10) geeigneten Stromquelle verbunden werden können.

14. Einrichtung nach einem der Ansprüche 12 oder 13, dadurch gekennzeichnet, daß die von den Kanälen (20), welche in einer oder mehreren der steifen Schalen (18) ausgebildet sind, aufgenommenen elektrisch leitenden Elemente (22) untereinander verbunden sind, um benachbarte Schleifen zu bilden, welche mit den Mitteln (33) zum Feststellen eines Kurzschlusses verbunden sind.

15. Einrichtung nach irgendeinem der Ansprüche 12 bis 14 in Kombination mit einem der Ansprüche 10 oder 11, dadurch gekennzeichnet, daß die elektrisch leitenden Verbindungsschienen (32) auf der Außenfläche der Schale (18) zwischen bestimmten der Klemmen (28) von zwei benachbarten Einrichtungen (16) derart angeordnet sind, daß die elektrisch leitenden Elemente (22) dieser Einrichtungen in Reihe elektrisch miteinander verbunden sind.

**Claims**

1. Sub-assembly for the detection of leaks of liquid metal circulating in a component of a circuit, such as a conduit (10) or valve, or contained in a storage unit such as a reservoir, comprising electrically conductive elements (22) disposed in the interior of an electrically insulating material characterized in that said insulating material comprises a rigid shell (18) whose internal surface mates with the external surface of the said component (10), open grooves (20) being formed in the internal surface of the shell to receive said electrically conductive elements (22), said grooves (20) exhibiting in section an enlarged portion (26) located at a distance from the internal surface of the shell and containing the electrically conductive elements (22), and a portion of smaller size (24), situated between the enlarged portion and the internal surface of the shell, and keeping the electrically conductive elements spaced from said internal surface.

2. Sub-assembly according to claim 1 characterized in that the enlarged portion (26) of the grooves has a cross section complementary to the external envelope of the electrically conductive elements (22).

3. Sub-assembly according to either of the preceding claims characterized in that the electrically conductive elements (22) are metallic wires helically wound in the interrior of the grooves (20).

4. Sub-assembly according to either of claims 1 and 2 characterized in that the electrically conductive elements (22) are metallic ribbons forming undulations in the interior of the grooves (22).

5. Sub-assembly according to any of the preceding claims characterized in that the rigid shell (18) is made from a material comprising fibres immersed in a rigid reinforcing substrate.

6. Sub-assembly for the detection of leaks of liquid metal circulating in a conduit (10) according to any one of the preceding claims characterized in that the rigid shell (18) is a hollow half-cylinder, the grooves (20) being helicoidal, parallel to one another, and regularly spaced.

7. Sub-assembly according to claim 6 characterized in that the grooves (20) are inclined at an angle of substantially 45° to the axis of shell (18).

8. Sub-assembly for the detection of leaks of liquid metal circulating in a conduit, according to any one of claims 1 to 5, characterized in that the rigid shell (18) is a hollow half-cylinder, the grooves being parallel to the axis of the half-cylinder, and regularly spaced.

9. Sub-assembly according to claim 8 characterized in that the electrically conductive elements (22) are disposed in the grooves (20) having different lengths or at different spacings, whereby to define transverse zones that can be differentiated from one another by electrical means.

10. Sub-assembly according to any one of the preceding claims characterized in that each of the electrically conductive elements (22) is electrically connected at its two ends to terminals (28) opening on the external surface of the shell (18).

11. Sub-assembly according to claim 10 characterized in that electrically-conductive bus bars (32) are disposed on the external surface of the shell (18) between certain of the said terminals (28) whereby to connect electrically in series a plurality of electrically-conductive elements (22).

12. Apparatus for the detection of leaks of liquid metal circulating in a circuit comprising one or more components, such as a conduit (10) or a valve, characterized in that it comprises a plurality of sub-assemblies (16) according to any one of the preceding claims, and means (33) for detecting a short-circuit between the circuit (10) and any one of the electrically conductive elements (22).

13. Apparatus according to claim 12 characterized in that the electrically conductive elements (22) provide heating resistances adapted for connection to a current source appropriate to ensure heating of the circuit (10).

14. Apparatus according to either of claims 12 and 13 characterized in that the electrically conductive elements (22) in the grooves (20) formed in one or more of the rigid shells (18) are inter-connected to form local loops connected to said short circuit-detecting means (33).

15. Apparatus according to any one of claims 12 to 14 taken in combination with either of claims 10 or 11, characterized in that the electrically conductive bus bars (32) are disposed on the external surface of the shells (18) between certain of the said terminals (28) of two adjacent sub-assemblies (16), whereby to connect electrically in series electrically-conductive elements (22) of said sub-assemblies.

FIG. 1

FIG. 2

FIG. 3

FIG. 4

FIG. 5

FIG. 6